Europäisches Patentamt

European Patent Office

Office européen des brevets

(11) Numéro de publication: **0 336 836**

**A1**

## (12) DEMANDE DE BREVET EUROPEEN

(21) Numéro de dépôt: **89400925.7**

(22) Date de dépôt: **04.04.89**

(51) Int. Cl.⁴: **G 03 B 42/04**

(30) Priorité: **08.04.88 FR 8804658**

(43) Date de publication de la demande:
**11.10.89 Bulletin 89/41**

(84) Etats contractants désignés:
**BE DE ES GB IT NL**

(71) Demandeur: **ICONOS
48, avenue Legeay
F-92410 Ville d'Avray (FR)**

(72) Inventeur: **Thibault, Jean Paul Marie
21, rue Joubert
F-75009 Paris (FR)**

**Rousseau, Bernard Jean-Claude
5, sente du Ficheray
F-95220 Herblay (FR)**

(74) Mandataire: **Mestre, Jean et al
c/o CABINET LAVOIX 2, place d'Estienne d'Orves
F-75441 Paris Cédex 09 (FR)**

(54) **Appareil pour former optiquement des informations sur un film radiographique en cassette.**

(57) L'appareil qui utilise des cassettes à fenêtre close par un volet mobile et garnies d'un film comprend, essentiellement, une base (10) recouverte d'un boîtier (20) où sont logés un support (30) destiné à recevoir une cassette (1) garnie, un mécanisme (40) un système optique (50) et une tablette graphique (60).

Application à l'identification complète des films par une exposition différente de celle donnant le cliché.

FIG 1

EP 0 336 836 A1

### Description

## APPAREIL POUR FORMER OPTIQUEMENT DES INFORMATIONS SUR UN FILM RADIOGRAPHIQUE EN CASSETTE

L'invention concerne la radiographie notamment médicale, et, plus particulièrement, un appareil perfectionné pour former sur un film radiographique contenu dans une cassette à fenêtre, des marques de repérage portant notamment des informations relatives à l'identité du patient, à la nature et au type de l'examen radiographique et, aussi, à l'exposition elle-même.

Les problèmes liés au repérage des clichés radiographiques sont bien connus. Il est absolument indispensable que chaque cliché porte des informations concernant l'identité du patient pour éviter les confusions de personnes. Il faut aussi que chaque cliché porte des informations concernant l'examen radiographique telles que sa nature et son type pour éviter, notamment, les inversions droite-gauche. Il faut encore que chaque cliché porte des informations concernant l'exposition elle-même telles que la dénomination de l'établissement médical, le nom du praticien, la date et l'heure, les conditions opératoires ( durée d'exposition, tension, intensité),...

Ces différents types d'informations sont, habituellement, portés sur des supports distincts indépendants les uns des autres qu'il faut réunir à l'occasion de l'exposition. Diverses solutions ont été proposées qui font, presque toutes, appel à des caractères à base de plomb que l'on utilise avec des cassettes à fenêtre close par un volet mobile et mises en oeuvre avec des appareils spéciaux.

Un appareil de ce type est, par exemple, décrit dans la demande de brevet français 2 047 247.

Cet appareil comprend un support pour recevoir une cassette à fenêtre protégée par un volet mobile, garnie d'un film radiographique, un poste pour recevoir des informations d'une carte d'identification, un mécanisme pour l'ouverture et la fermeture du volet de la cassette et un système optique pour projeter au travers de la fenêtre momentanément ouverte une image de ces informations afin d'exposer le film dans une plage distincte du cliché proprement dit.

Cet appareil ne donne cependant par entière satisfaction. En effet seules les informations de cette carte et, éventuellement d'autres, très limitées, concernant l'exposition peuvent être utilisées pour en former une image sur le film qui apparaîtra à coté du cliché lui même sous forme d'un cartouche.

L'ensemble des informations que requiert, habituellement, le praticien n'est pas simultanément et automatiquement présent. De plus, il a fallu procéder à des transcriptions manuelles faisant le plus souvent appel aux caractères en plomb dont la mise en oeuvre est mal commode, fastidieuse et source d'erreurs

L'invention a pour but de remédier à la plupart de ces inconvénients.

L'invention a pour objet un appareil pour former optiquement sur un film radiographique contenu dans une cassette à fenêtre close par un volet mobile l'ensemble des informations pour le repérage d'un cliché indépendamment de l'exposition de ce dernier, équipé entre autres, d'une base recouverte d'un boitier où sont logés un support destiné à recevoir une cassette garnie d'un film radiographique, d'un mécanisme et d'un système optique caractérisé en ce qu'il comprend une tablette graphique qui est montée mobile en translation et dont les déplacements sont commandés par le mécanisme et qui est constituée d'un registre de sélection portant des informations relatives à l'examen pratiqué et d'un pupitre d'affichage avec une zone pour des informations relatives aux modalités de la prise d'un cliché et avec une zone pour des informations relatives notamment au patient, où le système optique regroupe des images des diverses informations pour exposer la partie du film radiographique à l'aplomb de la fenêtre et où le mécanisme coordonne le fonctionnement de l'appareil.

D'autres caractéristiques de l'invention apparaîtront à la lecture de la description et des revendications qui suivent ainsi qu'à l'examen du dessin annexé, donné seulement à titre d'exemple, où:

- la Fig 1 est une vue perspective schématique, avec écorchés et crevés locaux, montrant un mode de réalisation d'un appareil selon l'invention,

- les Fig 2A et 2B sont des vues schématiques de deux variantes d'execution d'un système optique d'un appareil selon l'invention,

- la Fig 3 est une vue partielle d'une tablette graphique d'un appareil selon l'invention,

- la Fig 4 est une vue schématique de dessus illustrant un mécanisme d'un appareil selon l'invention,

- la Fig 5 est un schéma électrique,

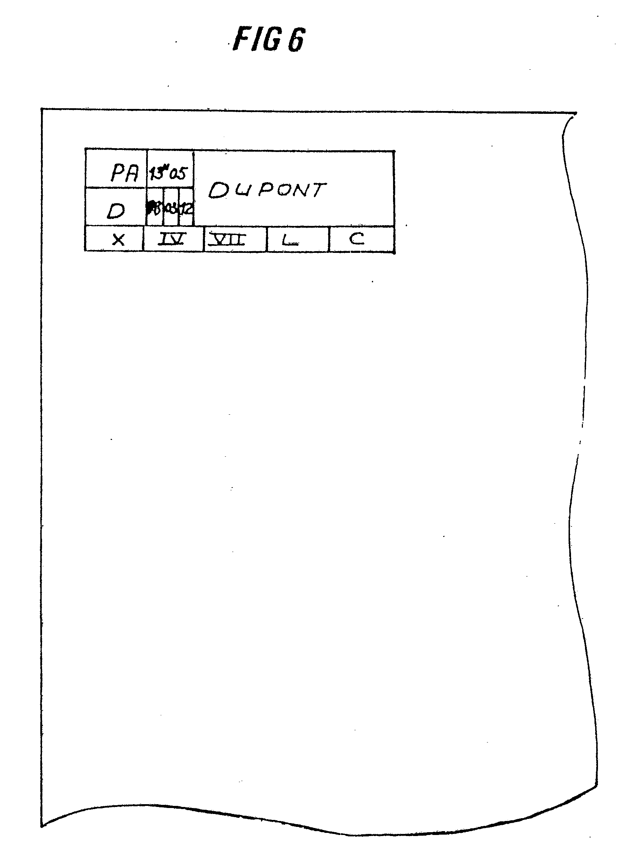

- la Fig 6 est un facsimilé d'un cartouche exposé sur un cliché radiographique à l'aide d'un appareil selon l'invention.

Les cassettes radiographiques et les appareils servant à leur mise en oeuvre sont bien connus dans la technique. C'est pourquoi ce qui suit est limité à ce qui concerne l'invention. Pour tous les autres aspects le spécialiste de la technique considérée puisera dans les solutions classiques à sa disposition pour faire face au problème particulier auxquels il est confronté.

Dans la description qui suit on utilisera toujours le même numéro de référence pour désigner un élément homologue quel que soit le mode de réalisation concerné.

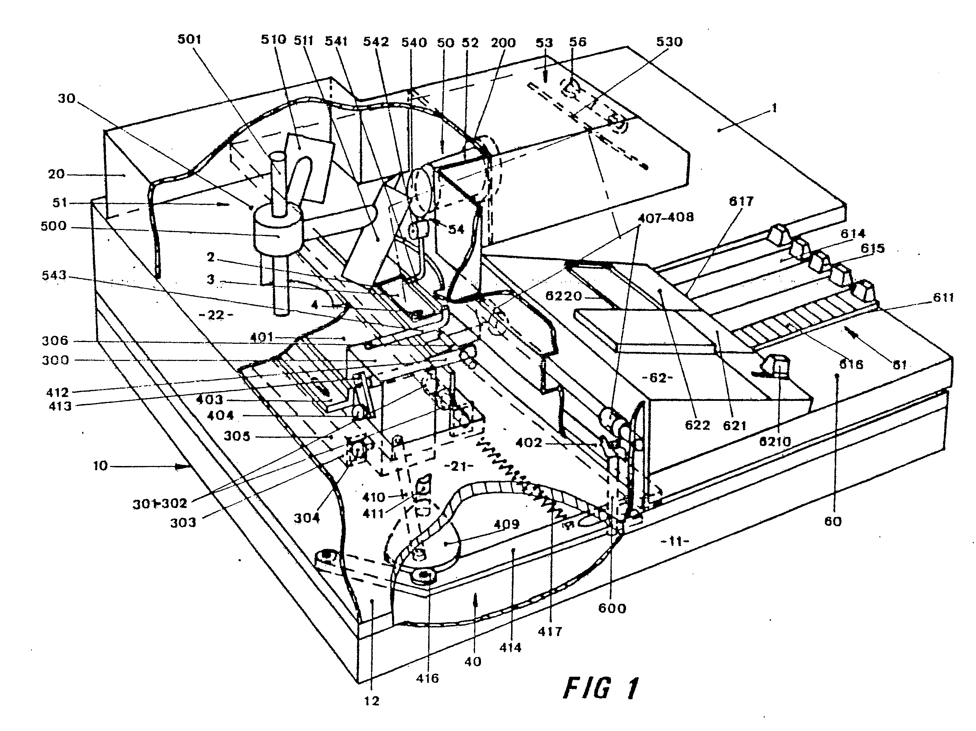

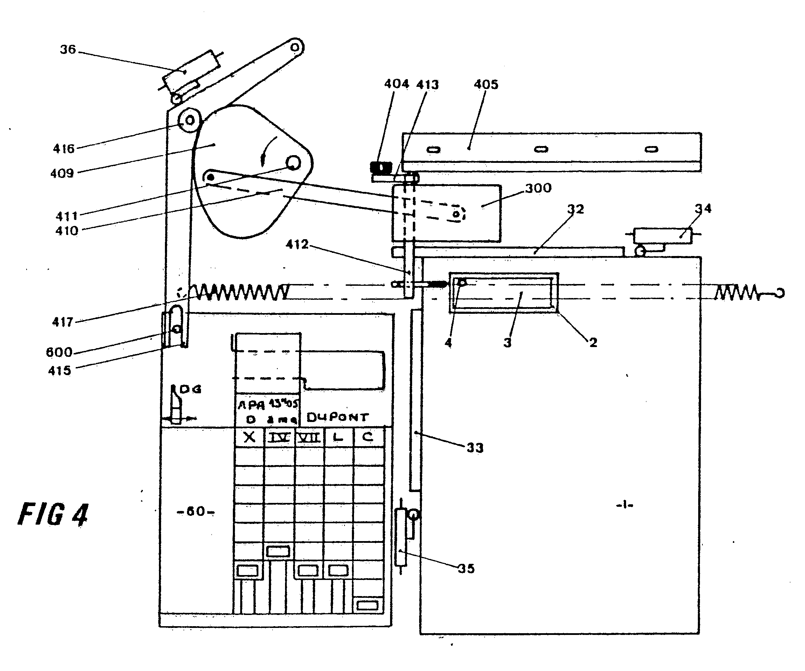

Comme on le voit, notamment sur les Fig 1 et 4, le mode de réalisation dessiné d'un appareil selon l'invention comprend, notamment, une base (10) recouverte d'un boîtier (20) où sont logés un support (30) avec ses sécurités destiné à recevoir une cassette (1), un mécanisme (40), un système optique (50) et une tablette graphique (60).

La base (10) est constituée, par exemple d'un caisson (11) plat, dont la face supérieure est renforcée par une plaque (12) rigide, qui sert de plate-forme. Sur cette plaque (12) vient se monter notamment le mécanisme (40), comme il apparaîtra par la suite.

Le boîtier (20) est de préférence étanche à la lumière.

Le support de cassette (30) est destiné à assurer la mise en place, d'une manière rigoureuse et parfaitement définie et précise, d'une cassette (1), de tout type connu classique, munie d'une fenêtre (2) close par un volet (3) mobile. Ces cassettes étant relativement normalisées, on ne s'y étendra pas davantage

Le support (30), auquel on accède par une ouverture (31) pratiquée dans le boîtier (20) comme illustré, est muni de deux butées (32) et (33) disposées en équerre et destinées a coopérer avec celui des angles d'une cassette qui est proche de la fenêtre (2). A ces butées (32), (33) sont associées des sécurités (34), (35) tels des micro-interrupteurs sur lesquels on reviendra par la suite.

Un chariot (300) est guidé par deux coussinets (301) et (302) coulissant sur un arbre (303) ainsi que par un roulement à billes (304) ou analogue circulant dans une gorge en "U" (305) par exemple un profilé. Un picot (306) sur lequel on reviendra par la suite commande les déplacements du volet (3) pour l'ouvrir et le fermer. Des garnitures d'étanchéité éventuellement mobiles, coopèrent avec la fenêtre (2) pour assurer l'étanchéité à la lumière lors de l'ouverture du volet; ceci est classique.

Le mécanisme (40) utilise deux fentes (401) et (402) pratiquées dans la plaque (12). La fente (401) est destinée à recevoir le chariot (300) pour l'ouverture du volet (3) de la cassette et la fente (402) est destinée à recevoir une barre (600) de la tablette graphique (60) comme on le verra par la suite.

Ce mécanisme comprend encore une rampe (403) rectiligne à deux niveaux fixée de manière réglable sur la face supérieure de la plaque (12). Sur cette rampe (403) roule un galet (404) et ce galet (404) opère une montée verticale lors du changement de niveau ce qui a pour effet de faire basculer le picot (306).

Ce mécanisme comprend de plus une tringle (406) montée sur le boîtier (20), sur laquelle coulissent deux douilles à billes (407) et (408) ou analogue associées à la tablette graphique (60) comme on le comprendra par la suite.

Ce mécanisme comprend aussi une came manivelle (409) reliée par une bielle (410) au chariot (300). Cette came (409) est entraînée par un arbre (411) d'un motoréducteur non représenté.

Ce mécanisme comprend en outre un axe (412) dont l'une des extrémités est coudée deux fois pour former une manivelle (413) qui porte le galet (404). L'autre extrémité de cet axe (412) porte le picot (306) dont la pointe est destinée à s'engager dans un alvéole (4) du volet (3) pour en assurer la manoeuvre.

Ce mécanisme comprend encore un bras (414), rigide, articulé sur la plaque (12) par l'une de ses extrémités et muni d'une fourchette (415) à l'extrémité opposée. Ce bras (414) est muni, comme représenté sur la Fig 4, d'un roulement à billes (416) ou galet analogue qui repose contre la came manivelle (409). Un ressort (417) assure le contact entre le roulement (416) et la came (409).

Pour des raisons qui apparaîtront par la suite ce ressort (417) est choisi de manière à developper un effort juste suffisant pour entraîner la tablette graphique (60) en situation normale, sans risque de dommages ou perturbations en cas de blocage accidentel. De même la position du roulement (416), le profil de la came (409), les dimensions relatives du bras (414) sont adaptés au rapport de réduction linéaire du système optique (50).

Comme on le voit en observant notamment la Fig 1, le boîtier (20) est divisé en deux compartiments (21) et (22) superposés. Le compartiment (21) inférieur, de forme approximativement rectangulaire présente à proximité de son fond et en angle, l'ouverture (210) pour l'insertion et le retrait d'une cassette (1). Le compartiment (22) supérieur en surplomb et ouvert vers le bas, renferme, au moins pour partie le système optique (50).

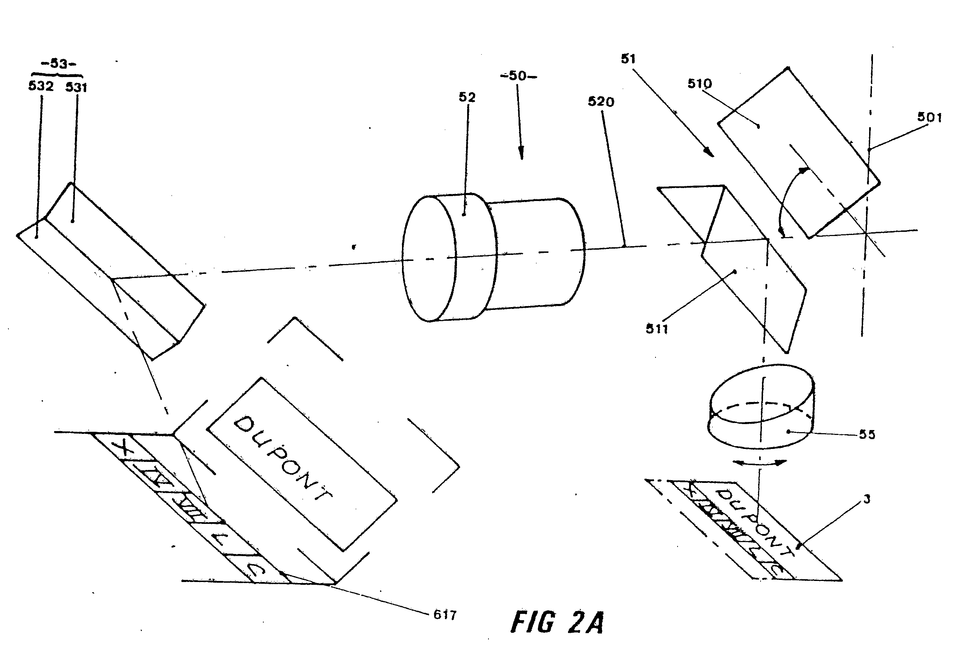

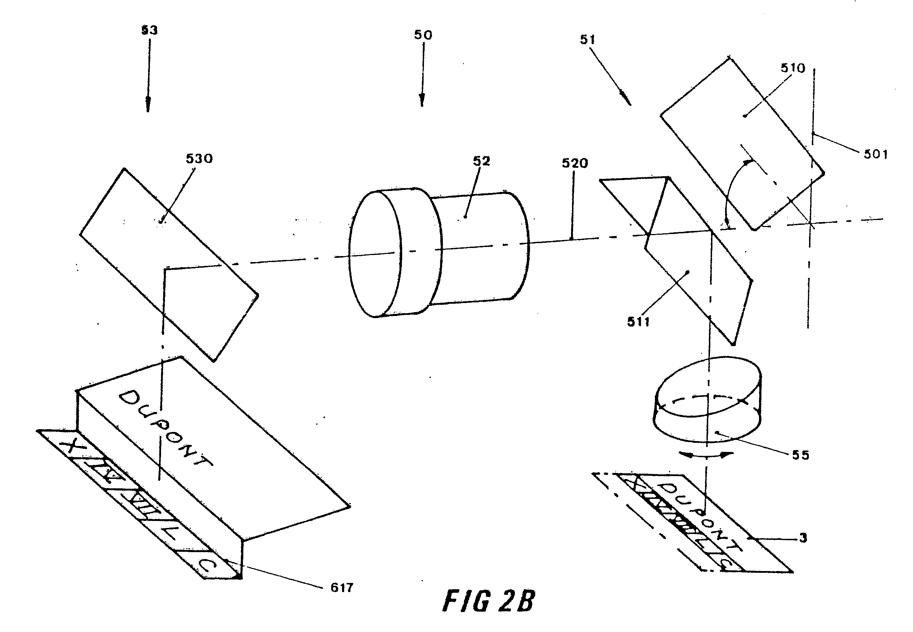

Le système optique (50) est illustré schématiquement sur les Fig. 2A et 2B où deux variantes de réalisation sont représentées. En règle générale seul les composants optiques sont repérés dans leur ensemble sans que leurs structures particulières et leurs montures propres et fixations soient dessinées; ceci est classique en optique et il n'est pas nécessaire de s'y étendre.

Le système optique (50) comprend entre autres une tête de lecture (53) et un objectif (52). La tête de lecture (53) est isolée de l'intérieur du compartiment (22) par une cloison (200) du boîtier (20) qui porte aussi l'objectif (52).

Le groupe optique(51) comprend une monture (500) par exemple en"V" qui porte un réflecteur (510) plan et un réflecteur (511) dièdre. La monture (500) disposée horizontalement, comme illustré, est montée mobile suivant un axe (501) vertical de manière à pouvoir basculer d'un angle alpha pour placer l'un ou l'autre des reflecteurs (510) et (511) sur l'axe optique (520) de l'objectif (52). Pour des raisons qui apparaîtront par la suite, ce basculement de l'angle alpha permet d'inverser le sens de l'image par rapport au grand côté de la fenêtre (2) de la cassette.

La tête de lecture (53) permet de renvoyer sur l'axe optique (520) de l'objectif (52) une image de la tablette graphique (60) dont il sera question plus loin.

Un obturateur (54) complète le système optique (50). Cet obturateur comprend essentiellement une pale (540) oscillante montée de manière à pouvoir occulter le faisceau lumineux parvenant à la fenêtre (2) afin de maîtriser l'exposition du film lorsque cette fenêtre est ouverte. Cette pale (540) est portée par un bras (541) articulé sur un axe (542) et reliée par une tige (543) au chariot (300) de manière à assurer la coordination correcte du fonctionnement.

La tablette graphique (60) comprend un registre de sélection (61) et un pupitre d'affichage (62).

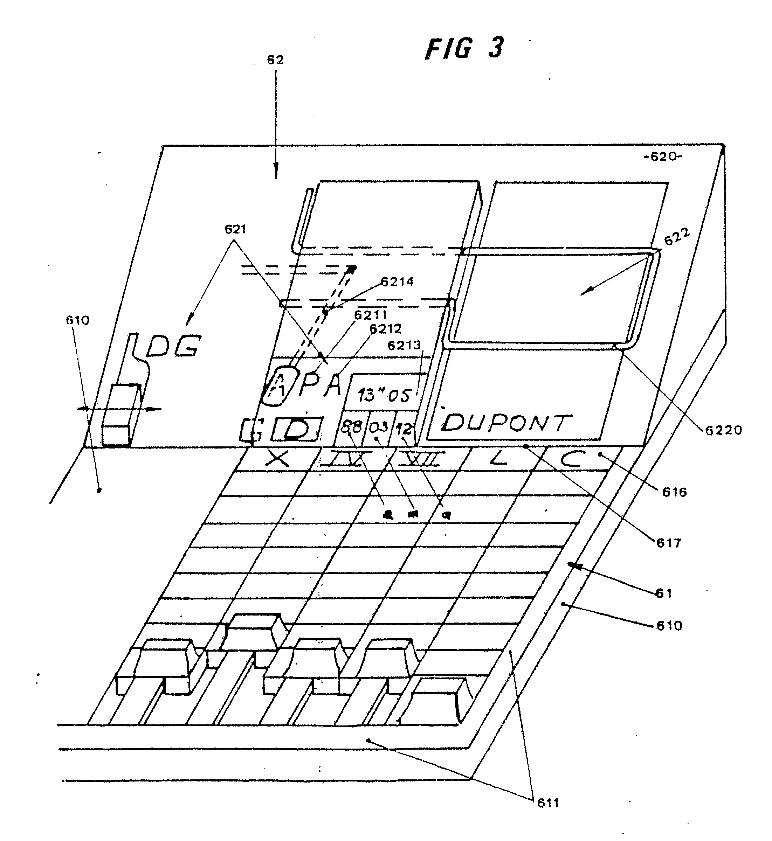

Le registre de sélection (61) comprend un plateau (610) ajouré définissant un cadre (611) où sont placées des glissières (612). Ces glissières (612) placées en vis à vis ont par exemple un intervalle de 20 mm environ et sont munies de crans (613) périodiques par exemple au pas de 6 mm; ceci apparaît sur la Fig 3. Des réglettes (614) mobiles longitudinalement sont logées entre chaque couple de glissières (612) dans lesquelles elles reposent. Chacune de ces réglettes (614), par exemple cinq, est munie à l'une de ses extrémités d'un bouton de manoeuvre (615) pour les déplacer, à volonté, par saut dont l'amplitude correspond au pas des crans (613) et elles sont immobilisées élastiquement dans la position choisie par exemple par des ressorts non illustrés.

Chacune des réglettes (614) est divisée en plage (616) distinctes dont l'intervalle correspond au pas des crans (613). Chacune de ces plages peut ainsi être alignée sur un repère (617). Ces plages (616) sont destinées à porter des informations que le praticien choisit à sa guise en fonction des examens qu'il pratique couramment. Ces informations par exemple: URO I.V. 6MN. POST.M. CLICHE N°4. CHIRG. B. etc... sont apposées ou gravées ou autrement portées de toute manière appropriée courante convenables sur les réglettes suivant la nature du matériau dont elles sont faites.

Le pupitre d'affichage (62) comprend un tableau (620) par exemple incliné qui se décompose, essentiellement, en deux zones (621) et (622) distinctes. La zone (621) est destinée à faire apparaître des informations relativement générales et classiques en radiologie les unes concernant les modalités de la prise du cliché telles que Droite-Gauche (D-G) et antéro-postérieur (A-P) ou postéro-antérieur (P-A) les autres concernant la chronologie an, mois, quantième, heure, durée de l'examen, (a,m,q,t,d ). La zone (622) est destinée à faire apparaître des informations particulières propres à l'identification d'un patient et d'ordre civile et/ou administrative( nom, prénom, date de naissance, numéro de sécurité sociale, références de l'établissement, du service, du praticien,...). Ces informations propres à l'identification d'un patient sont portées, habituellement sur une étiquette ou fiche d'identification.

Dans la zone (621) un sélecteur (6210) placé à l'aplomb des lettres D-G permet de retenir et d'indiquer celle qui convient. De la même manière les combinaisons AP et PA apparaissent à partir du groupe de trois lettres APA dont l'une des lettres A extrême est occultée selon les besoins par une pale (6211) oscillante autour d'un axe (6214), le mouvement de cette pale (6211) étant commandé électromécaniquement par le basculement du groupe optique (500). En se déplaçant de l'une à l'autre de leurs positions possibles, propres, le sélecteur (6210) et la pale(6211) entraînent l'affichage des informations correspondantes dans le champ de l'objectif (52) afin que celles-ci soient impressionnées au moment opportun sur le film de la cassette radiographique. Le sélecteur (6210) est associé par exemple à une lamelle portant les lettres D-G.

La chronologie apparaît sur des cadrans (6213) à affichage mécanique, électromécanique ou électrophysique à cristaux-liquides par exemple. On notera que les informations AP,PA et D,G peuvent être aussi de nature électrophysique.

La zone (622) est munie d'un presseur (6220) destiné à maintenir une fiche d'identification ou étiquette, non référencée cf. Fig 3 dont il a été question précédemment. Ce presseur (6220) est, par exemple, fait d'un fil métallique à ressort configuré comme illustré.

Comme cela ressort de l'examen de la Fig 1, la tablette graphique (60) est munie d'une barre (600) dont l'une des extrémités est engagée dans la fourchette (415) du bras (414).

La tablette graphique (60) est montée sur le boîtier (20) à l'aide de coulisses (602) de tout type approprié, par exemple à billes de manière à être mobile, dans sa totalité, en translation.

La tablette graphique (60) peut donc occuper une position de saisie de données comme illustré sur la Fig 1 et une position d'exposition non représentée où elle est alors intercalée entre la cassette (1) et la tête de lecture (53).

De même que les informations en clair, les informations codées telles que les codes à barres, les codes magnétiques... viennent se placer dans le champ de l'objectif (52). Ces informations pourront être exploitées "dynamiquement" grâce au coulissement de la tablette graphique (60).

Sur la plaque supérieur (12) sous la ligne de référence (617) une aire non représentée est réservée à l'implantation de capteurs de signaux tels que les crayons optiques couramment utilisés pour la lecture des codes à barres.

Les codes à barres imprimés ou gravés au verso des réglettes (614) sont ainsi aisément lus au cours de la translation de la tablette graphique (60). Si les informations enregistrées sur les réglettes (614) sont telles que sur l'une des faces (recto) tournée vers l'opérateur l'information soit en clair et sur la face opposée (verso) l'information soit codée par exemple en utilisant les codes à barres, un crayon optique captera l'information qui sera traitée ensuite par toutes procédures informatiques.

On notera, que la translation de la tablette graphique (60), la translation du chariot (300), peuvent être mises à profit pour lire ou enregistrer toutes formes de codes linéaires.

L'appareil selon l'invention peut servir et retransmettre des données tellesque le format des cassettes, le type d'écrans fluorescents, la nature de l'examen pratiqué etc... et fournir par conséquent tout élément comptable afférent. Des lampes(56) assurent l'éclairage du champ.

On perçoit que grâce à sa construction il soit possible de rassembler sur la tablette graphique (60) l'ensemble des informations nécessaires à un cliché et que ces informations puissent être lues et vérifiées d'un seul coup d'oeil avant leur exposition sur le film au travers de la fenêtre de la cassette (1). Deux variantes d'exécution permettent de saisir les avantages de l'invention; elles sont illustrées schématiquement sur les Fig 2A et 2B auxquelles on se reportera.

Dans l'une de ces variantes le repère (617) rectiligne, semble être dans le prolongement du tableau incliné (620) pour un observateur regardant à la verticale bien qu'il ne soit pas au même niveau Fig 2B. Un même miroir (530) ou autre réflecteur de la tête de lecture (53) couvre à la fois le repère (617) et la fiche d'identification du patient.

Dans l'autre de ces variantes, un espace existe entre le repère (617) rectiligne et le tableau incliné (620) qui restent toutefois parallèles. Deux miroirs (531) et (532) ou autre réflecteur de la tête de lecture (53), à arêtes communes, sont placés devant l'objectif (52). Le fait d'utiliser deux miroirs (531) et (532) permet d'obtenir dans le plan film deux images d'informations situées dans deux plans équidistants de l'arête commune aux deux miroirs (531) et (532) et parallèles à cette dernière.

L'une et l'autre de ces variantes d'exécution permet d'utiliser des cassettes radiographiques aux normes européennes et nord-américaines dont la différence essentielle porte sur la largeur de la fenêtre (2) qui est de 16mm en Europe et de 25mm aux U.S.A. Le passage d'un des formats de fenêtre à l'autre s'obtient facilement à l'aide d'une anamorphose optique obtenue par exemple à l'aide d'un prisme (55) convenablement choisi pour ne pas détériorer la qualité de l'image au point de la rendre inexploitable.

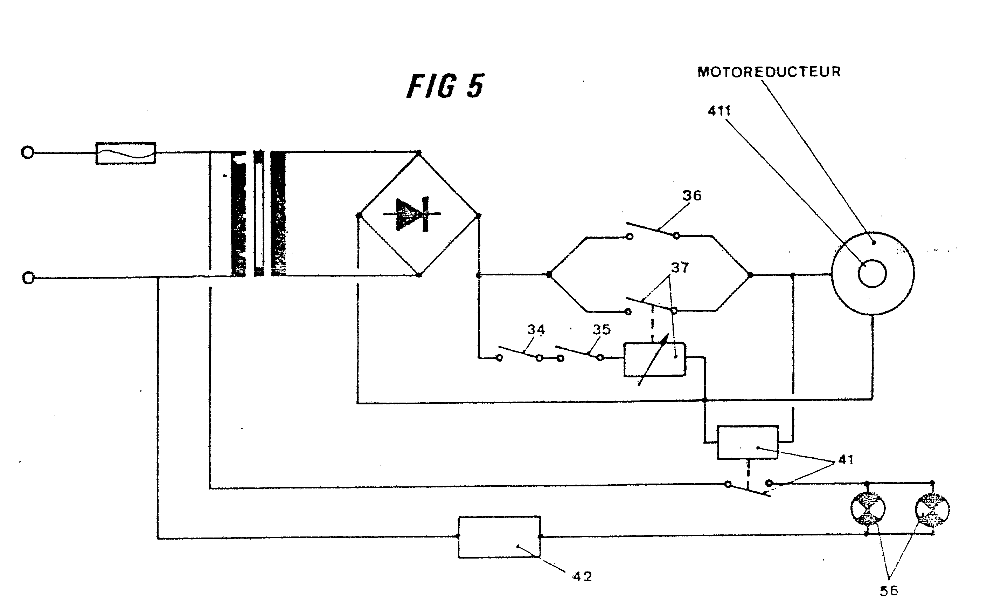

La Fig 5 illustre le schéma électrique de l'appareil selon l'invention. Il est explicite en lui même pour qu'il ne soit pas nécessaire d'en détailler l'exposé.

Le fonctionnement de l'appareil selon l'invention est donc le suivant en référence aux Fig 4 et 5. Sur la Fig 4 on a représenté une cassette en position de complète introduction, prête à être identifiée. On a mis sous le presseur (6220) une fiche d'identification du patient, placé le sélecteur (6210) et la pale (6211) sur les positions requises et agi sur les réglettes (614) pour leur faire indiquer les informations nécessaires.

Lorsqu'on pousse une cassette (1) dans l'angle droit des butées (32) et (33) en équerre munies chacunes des micro-interrupteurs (34) et (35), cette cassette (1) en appui sur ces mêmes micro-interrupteurs (34) et (35) branchés en série ferme le circuit électrique. Cela a pour effet d'exciter un relais temporisé (37) qui met en marche le motoréducteur entraînant la came manivelle (409). Lorsque la came manivelle (409) a tourné d'un angle de 20° environ l'interrupteur (36) qui s'est séparé du bras articulé (414) se ferme. Il prend dès lors la "relève" du relais temporisé (37) qui, lui, revient à sa position de repos c'est à dire contact ouvert sans pour autant arrêter le motoréducteur. L'alimentation électrique du moto-réducteur sert aussi à l'allumage des lampes (56) via un contacteur (41). Le cycle prend fin lorsque, à son tour le bras articulé (414) entraîné par la came manivelle (409) revient ouvrir l'interrupteur (36). On notera que la tension des lampes (56) est réglable pour tenir compte de la sensibilité des films radiographiques à l'aide d'un graduateur (42).

Au cours d'une révolution complète de la manivelle (409) le chariot (300) et la tablette graphique (60) se déplacent relativement l'un à l'autre. Lorsque la came manivelle (409) a tourné d'un angle de 150° environ le bras articulé (414) a balayé un angle de 60° environ ce qui a placé la tablette graphique (60) sous la tête lecture (53). La tablette graphique (60) demeure à cette position jusqu'à ce que la came manivelle (409) ait effectué une rotation de 270° environ. A 150° de rotation de la came manivelle (409) le chariot (300) a décrit environ 85% de sa course qui est de 100mm. Les 15% restant sont mis à profit pour ouvrir l'obturateur (34) afin de permettre l'exposition. A 180° de rotation environ, la came manivelle (409) amorce le retour du chariot (300) à sa position de départ. Ce mouvement sera suivi de celui de la tablette graphique (60). On remarquera par conséquent que le rappel de la tablette graphique (60) est retardé par rapport à celui du chariot (300) et qu'il s'effectue en un temps plus court. La durée totale du cycle est de deux secondes environ.

On saisit tous les avantages de l'appareil selon l'invention qui permet de réunir optiquement des informations ou données diverses figurant sur des éléments distincts afin d'en former une image dans un cartouche d'un cliché radiographique dont elle devient inséparable sans que l'on ait eu à recourir à des caractères à base de plomb et en une seule et unique opération distincte de la prise du cliché radiographique.

## Revendications

1) Appareil pour former optiquement sur un film radiographique contenu dans une cassette à fenêtre close par un volet mobile l'ensemble des informations pour le repérage d'un cliché indépendamment de l'exposition de ce dernier, équipé entre autres, d'une base (10) recouverte d'un boîtier (20) où sont logés un support (30) destiné à recevoir une cassette garnie d'un film radiographique, d'un mécanisme (40) et d'un système optique (50) caractérisé en ce qu'il comprend une tablette graphique (60) qui est montée mobile en translation et dont les déplacements sont commandés par le mécanisme (40) et qui est constituée d'un registre de sélection (61) portant des informations relatives à l'examen pratiqué et d'un pupitre d'affichage (62) avec une zone (621) pour les informations relatives aux modalités de la prise d'un cliché et avec une zone (622) pour des informations relatives notamment au patient, où le système optique (50) regroupe des images des diverses informations pour exposer la partie du film radiographique à l'aplomb de la fenêtre et où le mécanisme (40) coordonne le fonctionnement de l'appareil.

2) Appareil selon la revendication 1 caractérisé en ce que le registre de sélection (61) de la tablette graphique (60) comprend des réglettes (614) montées coulissantes et divisées en plages (616) équidistantes pour les informations relatives à l'examen pratiqué.

3) Appareil selon la revendication 2 caractérisé en ce que les réglettes (614) sont munies de crans (613) équidistants pour leur positionnement.

4) Appareil selon l'une quelconque des revendications 1 à 3 caractérisé en ce que le système optique (50) comprend un seul objectif (52) et une tête de lecture (51).

5) Appareil selon la revendication 4 caractérisé en ce que la tête de lecture (51) comprend un réflecteur plan (510) et un réflecteur dièdre (511) portés par une monture (500) mobile angulairement selon un axe (501).

6) Appareil selon l'une quelconque des revendications 1 à 5 caractérisé en ce que le mécanisme (40) est relié d'unE part au support (30) de cassette pour en manoeuvrer le volet et d'autre part à la tablette graphique (60) pour la mouvoir entre sa position de saisie de données et sa position d'exposition.

7) Appareil selon la revendication 6 caractérisé en ce que le mécanisme (40) comprend une came manivelle (409), un bras (414) sollicité élastiquement avec un galet (416) coopérant avec la came (40) et une fourchette (415) coopérant avec une barre (600) de la tablette graphique (60), une bielle (410) reliée à la came (409) et à un chariot (300) coulissant auquel est associé un picot (306) mobile commandant la manoeuvre du volet de cassette.

8) Appareil selon la revendication 7 caractérisé en ce que le picot (306) est associé au chariot (300) à l'aide d'un axe (412) coudé deux fois portant un galet (404) et ce picot (306) et en ce que ce galet (404) roule sur une rampe (403) rectiligne à deux niveaux.

FIG 1

FIG 2A

FIG 2B

**FIG 3**

FIG 4

EP 0 336 836 A1

FIG 5

MOTOREDUCTEUR

411

36

37

35

34

41

56

42

## FIG 6

| PA | 15"05 | DUPONT | | |
|----|-------|--------|---|---|
| D | | | | |
| X | IV | VII | L | C |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-2 021 494 (EASTMAN KODAK CO.) * Pages 10-14; figures 1-8 * & FR-A-2 047 247 --- | 1,4 | G 03 B 42/04 |
| A | US-A-3 953 738 (R. HÜTTNER) * Colonnes 3-6; figures 1-3 * --- | 1 | |
| A | FR-A-2 406 427 (SIEMENS AG) * Pages 4-8; figures 1-3 * ----- | 1 | |

DOMAINES TECHNIQUES
RECHERCHES (Int. Cl.4)

G 03 B 42/04
G 03 B 27/52

Le présent rapport a été établi pour toutes les revendications

| Lieu de la recherche | Date d'achèvement de la recherche | Examinateur |
|---|---|---|
| LA HAYE | 03-07-1989 | BOEYKENS J.W. |